# EUROPEAN PATENT APPLICATION

(11) **EP 1 713 019 A2**
(43) Date of publication of application: **18.10.2006**
(21) Application number: 06111942.6
(22) Date of filing: 29.03.2006
(51) Int. Cl.: G06K 15/10

(54) **Printing apparatus and method**

(30) Priority: 12.04.2005 KR 200530435
(71) Applicant: SAMSUNG ELECTRONICS CO., LTD., Suwon-City, Kyungki-do (KR)
(72) Inventor: Jeong, Jin-wook, Gyeonggi-do (KR); Ju, Young-bok, Gyeonggi-do (KR)
(74) Representative: Read, Matthew Charles

(57) **Abstract**

A print method to increase a lifetime of a printer head and a printer, a host, and a print system using the print method. The print method includes counting an amount of printing performed in a current print job, outputting a page inverting signal when the current print job is complete and the counted amount of printing performed is greater than a threshold value, and receiving and printing a page of a next print job that corresponds to the page inverting signal.

## Description

The present invention relates to printers. More particularly, the present invention relates to a print method and apparatus for increasing the lifetime of a line-array printer head.

In thermal inkjet type line-array printer heads, the maximum number of ejections of a nozzle after which the print quality cannot be guaranteed is limited by manufacturers.

Also, in line-array heads (i.e., wide-array type ink jet heads), since the location of a plurality of nozzles is fixed relative to each other to cover a width corresponding to a width of a page, utilization frequencies of the nozzles may vary according to the print data. That is, the nozzles that correspond to margins of the page may be used less frequently. However, since a print job is generally started from the left side of the text, the utilisation rate of the nozzles on the left is greater than that of the nozzles on the right. In other words, since text on the page typically begins on the left hand side of the page, the nozzles on the left get used more frequently than the nozzles on the right. Therefore, the lifetime of a line array head depends upon the age of the nozzles on the left.

The present invention provides a print method to increase a lifetime of a printer head by alternately performing a print job of an original page and a print job of an inverted page in accordance with an amount of printing performed so as to allow all nozzles to uniformly eject ink when performing one or more print jobs using a line-array printer head, and a printer, a host, and a print system using the print method.

Additional aspects of the present general inventive concept will be set forth in part in the description which follows and, in part, will be obvious from the description, or may be learned by practice of the general inventive concept.

The foregoing and/or other aspects of the present general inventive concept are achieved by providing a print method comprising counting an amount of printing performed in a current print job, outputting a page inverting signal when the current print job is complete and the counted amount of printing performed is greater than a threshold value, and receiving and printing a page of a next print job that corresponds to the page inverting signal.

The foregoing and/or other aspects of the present general inventive concept are also achieved by providing a method of printing, the method comprising printing a first one or more pages in a normal mode, and printing a second one or more pages in an inverted mode.

The foregoing and/or other aspects of the present general inventive concept are also achieved by providing a method of printing, the method comprising monitoring an amount of printing performed in one or more jobs of a print head having a plurality of nozzles, and controlling the print head to print in one of an inverted mode and a normal mode such that the nozzles at two ends of the print head have about a uniform ejection rate according to the monitored amount of printing performed.

The foregoing and/or other aspects of the present general inventive concept are also achieved by providing a method of printing, the method comprising inverting print data of one or more pages to be printed when a page inverting signal is received from a printer, and providing the inverted print data of the one or more pages to the printer when the page inverting signal is received therefrom.

The foregoing and/or other aspects of the present general inventive concept are also achieved by providing a printer to receive a page from a host and to print the received page, the printer comprising a control unit to count an amount of printing performed in a print job, to output a predetermined signal to the host when the counted amount of printing performed in the print job is greater than a threshold value, and to process and output a page received from the host in response to the predetermined signal, and a head unit to print the page output from the control unit.

The foregoing and/or other aspects of the present general inventive concept are also achieved by providing a printer, comprising a print head, and a control unit to control the print head to print a first one or more pages in a normal mode and to print a second one or more pages in an inverted mode.

The foregoing and/or other aspects of the present general inventive concept are also achieved by providing a printer, comprising a print head having a plurality of nozzles to perform one or more jobs, and a control unit to monitor an amount of printing performed in the one or more jobs and to control the print head to print in one of an inverted mode and a normal mode such that the nozzles at two ends of the print head have about a uniform ejection rate according to the monitored amount of printing performed.

The foregoing and/or other aspects of the present general inventive concept are also achieved by providing a host to output a page to be printed by a printer, the host comprising a storage unit to store the page, a signal receiving unit to receive a predetermined signal from the printer, a page inverting unit to output the page stored in the storage unit as is or to invert and output the page based on whether the predetermined signal is received, and a printer driver to convert the page output from the page inverting unit into data suitable for a print job of the printer and to output the converted page.

The foregoing and/or other aspects of the present general inventive concept are also achieved by providing a host device, comprising a page inverting unit to invert print data of one or more pages to be printed when a page inverting signal is received from a printer, and a printer driver to provide the inverted print data of the one or more pages to the printer when the page inverting signal is received therefrom.

The foregoing and/or other aspects of the present general inventive concept are also achieved by providing a print system comprising a host to output a page to be printed, and to invert and output the page to be printed when a predetermined signal is received, and a printer to count an amount of printing performed in a print job, to output the predetermined signal to the host when the counted amount of printing performed in the print job is greater than a threshold value upon completion of the print job, and to receive and print the page output from the host in response to the predetermined signal.

The foregoing and/or other aspects of the present general inventive concept are also achieved by providing a computer readable medium containing executable code to control a printer to operate in one or more of a normal page mode and an inverted page mode, the medium comprising executable code to determine an amount of printing that is performed during a first print job in a first mode of the normal page mode and the inverted page mode, executable code to determine whether the amount of printing that is performed during the first print job exceeds a predetermined threshold, executable code to switch between the normal page mode and the inverted page mode to a second mode and to control the printer to advance to a second print job or standby when the amount of printing that is performed during the first print job exceeds the predetermined threshold, and executable code to control the printer to continue in the first mode and to advance to the second print job or standby when the amount of printing performed does not exceed the predetermined threshold.

Embodiments of the invention will now be described by way of example, with reference to the accompanying drawings, in which:
Figure 1 illustrates a structure of a line-array head;
Figure 2 is a schematic block diagram illustrating a print system according to an embodiment of the invention;
Figure 3 illustrates an example of a page which is printed in a normal mode and a page which is printed in an inverted mode; and
Figure 4 is a flowchart illustrating a print method according to an embodiment of the present invention.

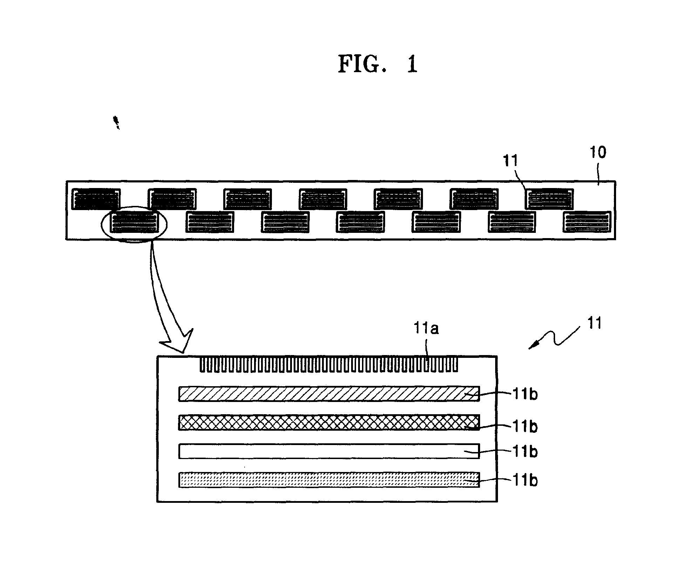

Referring to Figure 1, a line-array head includes a head frame 10 and head chips 11. Each head chip 11 includes connection terminals 11a and ink supply holes 11b to supply four colors of ink of cyan (C), magenta (M), yellow (Y), and black (B).

Alternatively, the head chips 11 may have other arrangements to supply inks of other colors.

Although not shown, a nozzle plate having a plurality of nozzles is provided at an upper portion of the head frame 10 and several colors of ink are supplied to the ink supply holes 11b through the nozzles. The number of nozzles may be, for example, 1,200 dpi x 8.5 inch (with reference to a printing sheet with A4 size) x four colors = 40,800 when a print job is performed with a horizontal resolution of 1,200 dpi.

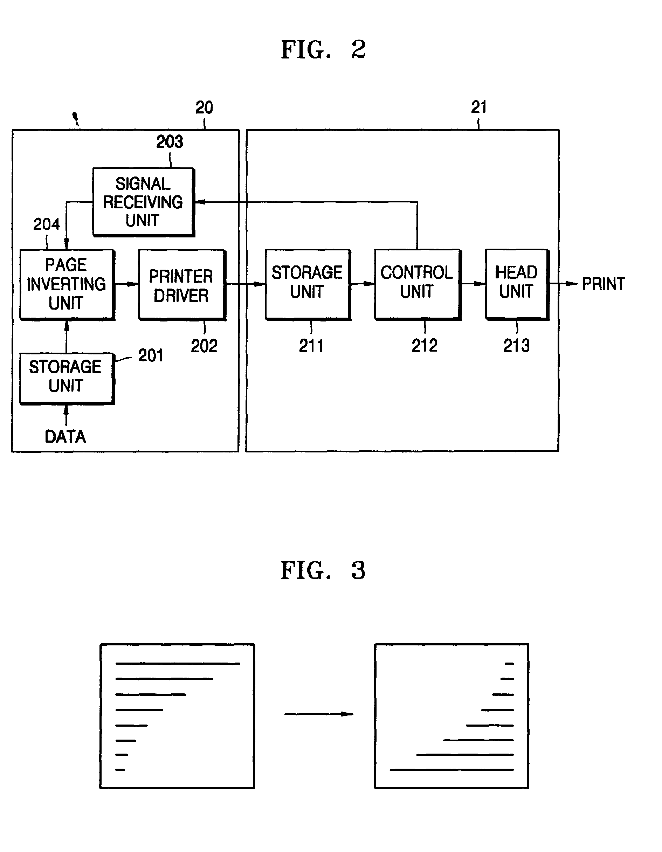

Referring to Figure 2, a print system includes a host 20 and a printer 21. The host 20 includes a storage unit 201, a printer driver 202, a signal receiving unit 203, and a page inverting unit 204.

A page to be printed is stored in the storage unit 201 in accordance with print instructions from an application program. The print mode of the stored page is determined based on signals received at the page inverting unit 204 from the signal receiving unit 203. The signal receiving unit 203, in turn, receives the page inverting signal output from the printer 21 and outputs the received signal to the page inverting unit 204.

If a page inverting signal from the signal receiving unit 203 is received at the page inverting unit 204, the page inverting unit 204 inverts the page stored in the storage unit 201 and outputs the inverted page to the printer driver 202 to be printed in an inverted mode. If the page inverting unit 204 does not receive the page inverting signal from the signal receiving unit 203, the page inverting unit 204 outputs the page stored in the storage unit 201 to the printer driver 202, as is, to be printed in a normal mode.

The printer driver 202 converts the page to be printed into page description language (PDL) data and outputs the converted page to the printer 21. The PDL data may be data in which images are compressed in a JPEG (Joint Photographic Experts Group) format and text is compressed in a JBIG (Joint Bi-level Image Experts Group) format.

Figure 3 illustrates an example of a page which is printed in the normal mode and a page which is printed in the inverted mode. A page printed in the inverted mode (on the right side of Figure 3) is inverted by rotating the page 180°. Consequently, a page printed in the inverted mode is printed in the opposite direction (orientation) to a page that is printed in the normal mode (on the left side of Figure 3).

The printer 21 includes a storage unit 211, a control unit 212, and a head unit 213. The head unit 213 may be a line-array head as illustrated in Figure 1. The head unit 213 may have a length that is substantially equal to or greater than the width of the page to be printed.

The storage unit 211 temporarily stores the PDL data output from the printer driver 202. The control unit 212 may decode the PDL data stored in the storage unit 211 into the JPEG format and the JBIG format, respectively, to decompress the PDL data and perform color correction, gamma correction, and horizontal enlargement to the JPEG data. The control unit 212 may then synthesize the JPEG data with the JBIG data, may perform a halftone process to the synthesized data, and output the processed data. Although the PDL data has been described to be processed and synthesized into JPEG format and JBIG format, it should be understood that additional and/or other processing operations/formats could be used according to the invention.

The control unit 212 counts the number of pages printed, and if the number of pages is greater than a threshold value "n," after a print job is finished, the control unit 212 outputs the page inverting signal to invert the page to the signal receiving unit 203 for the next print job. In other words, when the number of pages printed during a current print job is greater than the threshold value "n," the control unit 212 inverts one or more pages of a next print job as illustrated in Figure 3, thereby uniformly using all of the nozzles in the head unit 213, instead of using the nozzles on the left more than the nozzles on the right, or vice versa.

More generally, the control unit 212 may monitor an amount of printing that is performed (e.g., by using a number of dots or a number of pages printed) in order to perform an amount of printing in the normal mode roughly equal to the amount of printing performed in the inverted mode. Alternatively, the amount of printing performed in the inverted mode may be less than the amount of printing performed in the normal mode.

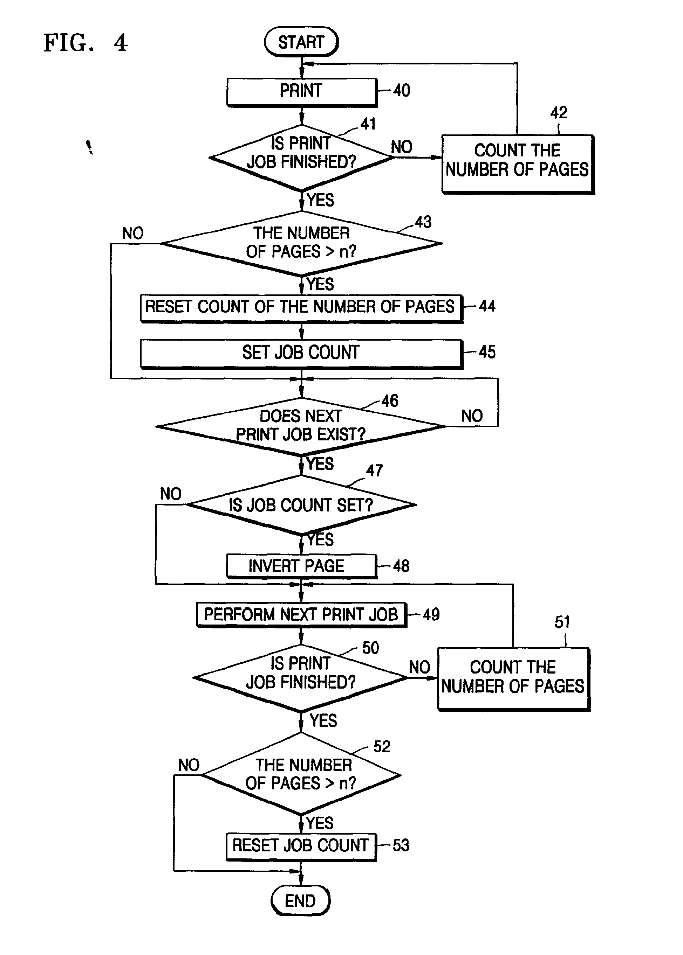

Figure 4 is a flowchart illustrating a print method according to an embodiment of the present invention, which can increase the lifetime of a printer head, the head unit 213, and the printer 21. The method of Figure 4 may be performed by the system of Figure 2. Accordingly, the method of Figure 4 is described below with reference to Figure 2.

The control unit 212 performs a print job in accordance with a user's instruction (operation 40). The control unit 212 counts the number of printed pages (operation 42) while performing the print job (operation 41). However, although it is described here that the number of pages is counted, it should be understood that the number of dots could alternatively be counted.

If the number of printed pages is greater than "n" (operation 43), when the current print job is finished, the page number count is reset (operation 44). Also, a mode flag is set to indicate whether the next page to be printed should be printed in an inverted mode or in a normal mode (operation 45). The mode flag may be a variable that is set and reset to indicate whether the control unit 212 controls the signal receiving unit 203 to output the page inverting signal. For example, if the mode flag is "1," the control unit 212 may control the host 20 to provide a next page to be printed in the inverted mode, and if the mode flag is "0," the control unit 212 may control the host 20 to provide the next page to be printed in the normal mode.

Subsequently, it is determined whether a next print job exists (operation 46). If there is a next print job, it is determined whether the mode flag is set (operation 47). If the mode flag is set, the page inverting signal is output to the signal receiving unit 203 (operation 48). The page inverting unit 204 reads out a page to be printed next from the storage unit 201 in accordance with the page inverting signal, inverts the read-out page as illustrated in Figure 3, and outputs the inverted page to the printer driver 202. The printer driver 202 then converts the inverted page into the PDL data and outputs the PDL data to the storage unit 211 of the printer 21. The control unit 212 decodes the PDL data received from the storage unit 211 into JPEG and JBIG data and performs the new print job using the head unit 213 (operation 49).

If the mode flag is not set in operation 47, the control unit 212 does not output the page inverting signal. Accordingly, the page inverting unit 204 outputs the page to be printed as is to the printer driver 202 without inverting the page to be printed in the normal mode. The printer driver 202 converts the received page into the PDL data and outputs the PDL data. The control unit 212 decodes the received PDL data into JPEG and JBIG data and performs the new print job (operation 49).

During the new print job (operation 50), the control unit 212 counts the number of pages (operation 51) printed and when the print job is finished, the control unit 212 determines whether the number of pages printed during the print job is greater than "n" (operation 52). If the new print job has been performed in inverted mode and if the number of pages printed during the new print job is greater than "n," the mode flag is reset such that the next print job is performed in normal mode. When the number of pages printed during the new print job is not greater than "n," the mode flag is not reset and the printer 21 continues operation in the inverted mode and inverts the next page to be printed (operation 53).

Accordingly, the control unit 212 uses the mode flag and the number of pages in order to determine whether pages of a new print job are to be printed in the normal mode or the inverted mode. In this manner, all pages of a print job are printed in a single mode (i.e., either the inverted mode or the normal mode), and a user is not required to sort pages printed in two different modes. However, although the present embodiment describes that the print mode of pages to be printed is determined according to the state of the mode flag and the number of pages printed in each of the modes, it should be understood that the print mode of pages to be printed may be determined according to the number of pages (or printed dots) printed in each of the modes and/or other information. For example, the control unit 212 may toggle between operation in the normal mode and the inverted mode whenever printer 21 is initialized.

The embodiments of the invention can also be embodied as computer readable codes on a computer readable recording medium. The computer readable recording medium is any data storage device that can store data, which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

According to the embodiments of the present invention, when using a line-array printer head, ejection rates of all nozzles in the line array printer head can be made more uniform by determining whether a page should be printed in normal mode or in inverted mode based on the print mode of previously printed pages. The decision to invert a page may be taken when the successive number of pages or number of dots printed in the normal mode exceeds a threshold number of pages or number of dots. Consequently, the average lifetime of the printer head can be extended.

Although only a few embodiments of the present invention have been shown and described, it will be appreciated by those skilled in the art that changes may be made in these embodiments without departing from scope of the appended claims.

## Claims

1. A method of printing comprising:
printing a first one or more pages in a normal mode; and
printing a second one or more pages in an inverted mode.

2. The method according to claim 1, wherein:
the printing of the first one or more pages in the normal mode comprises performing a print job using a wide array type ink jet head in which print data on the first one or more pages is printed in a first direction; and
the printing of the second one or more pages in the inverted mode comprises performing a print job using the wide array type ink jet head in which print data on the second one or more pages is printed in a second direction opposite to the first direction.

3. The method according to claim 1 or 2, further comprising:
outputting the first one or more pages after printing to have a normal orientation; and
outputting the second one or more pages after printing to have an inverted orientation that is rotated 180 degrees with respect to the normal orientation.

4. The method according to any one of the preceding claims, further comprising
counting a number of print units printed when the print head is controlled to print in a first mode of the normal mode and the inverted mode; and
comparing the number of print units printed with a predetermined threshold.

5. The method according to claim 4, wherein the number of print units comprises one or more of a number of pages printed and a number of dots printed.

6. The method according to claim 4 or 5, further comprising setting a print mode flag when the number of print units printed is larger than the predetermined threshold.

7. The method according to claim 6 comprising
outputting a page inverting signal when a new print job exists and when the mode flag is set to have a value indicating that the new print job should be printed in inverted mode.

8. The method according to any one of claims 4 to 7, further comprising resetting the counted number of print units when the number of print units is determined to be greater than the predetermined threshold.

9. The method according to claim 4, wherein the comparing is performed after a current print job is complete.

10. The method according to any one of claims 4 to 9, further comprising
receiving one of the inverted print data and the print data of the page to be printed; and
controlling the print head to print the received print data.

11. The method according to claim 10, further comprising:
receiving one of inverted print data and normal print data in a page description language (PDL); and
decoding the PDL data; and
processing the PDL data.

12. A method according to claim 1, further comprising
inverting print data of one or more pages to be printed when a page inverting signal is received from a printer; and
providing the inverted print data of the one or more pages to the printer when the page inverting signal is received therefrom.

13. The method according to claim 12, wherein the inverting of the print data comprises rotating the print data 180 degrees with respect to a normal orientation.

14. The method according to claim 13, wherein the inverting of the data further comprises converting the inverted print data into page description language (PDL).

15. Apparatus comprising
means for printing a first one or more pages in a normal mode; and
means for printing a second one or more pages in an inverted mode.

16. Apparatus according to claim 15, further comprising a printer having
a control unit to count a number of print units successively printed in a first mode of the normal mode and the inverted mode, to change a mode flag when the counted number of print units is greater than a threshold value, and to receive and process one of the inverted print data and the print data of a page to be printed; and
a print head to print the received page.

17. Apparatus according to claim 16, comprising means for checking whether a new print job exists and the control unit further being configured to output an inverting signal if a new print job exists and if the mode flag indicates that the next page to be printed should be printed in inverted mode.

18. Apparatus according to claim 16 or 17, wherein:
the print head comprises a wide array type ink jet head.

19. Apparatus according to any one of claims 16 to 18, wherein
the means for printing in a normal mode is configured to print data on the first one or more pages in a first direction, and the means for printing in an inverted mode is configured to print data on the second one or more pages in a second direction that is opposite to the first direction.

20. Apparatus according to any one of claims 16 to 19, wherein the print head outputs the first one or more pages after printing to have a normal orientation, and outputs the second one or more pages after printing to have an inverted orientation that is rotated 180 degrees with respect to the normal orientation.

21. Apparatus according to any one of claims 16 to 20, wherein the number of print units comprises one or more of a number of pages printed and a number of dots printed.

22. Apparatus according to any one of claims 16 to 21, wherein the control unit is further configured to reset the counted number of print units when the number of print units is determined to be greater than the predetermined threshold.

23. Apparatus according to any one of claims 16 to 22, wherein the control unit is configured to only change the mode flag between print jobs.

24. Apparatus according to one of claims 16 to 23, wherein the control unit is configured to receive one of inverted print data and normal print data in a page description language (PDL), decode the PDL data, process the PDL data, and control the print head to print the processed PDL data that corresponds to the one of the inverted print data and the normal print data.

25. Apparatus according to claim 15 further comprising a host device connected to a printer, the host device having :
a storage unit to store a page;
a signal receiving unit to receive a predetermined signal from said printer;
a page inverting unit to output the page stored in the storage unit as is or to invert and output the page based on whether the predetermined signal is received; and
a printer driver to convert the page output from the page inverting unit into data suitable for a print job of the printer and to output the converted page.

26. Apparatus according to claim 25, wherein the page inverting unit rotates the print data 180 degrees with respect to a normal orientation.

27. Apparatus according to claim 25 or 26, wherein the printer driver is operable to convert the inverted print data into page description language (PDL).

28. A computer program comprising instructions that when executed by a processor causes the processor to perform the method of any one of claims 1 to 14.
